# EUROPEAN PATENT SPECIFICATION

(11) **EP 2 820 293 B1**
(45) Date of publication and mention of the grant of the patent: **02.12.2015**
(21) Application number: 12816141.1
(22) Date of filing: 07.12.2012
(51) Int. Cl.: F03D 9/02, F03C 1/02

(54) **FLUID WORKING MACHINE AND WIND TURBINE GENERATOR**
FLÜSSIGKEITSARBEITSMASCHINE UND WINDTURBINENGENERATOR
MACHINE FONCTIONNANT AU FLUIDE ET AÉROGÉNÉRATEUR

(43) Date of publication of application: 07.01.2015
(73) Proprietor: Mitsubishi Heavy Industries, Ltd., Tokyo 108-8215 (JP)
(72) Inventor: NISHIDA, Hideaki, Tokyo 108-8215 (JP); VOLLER, Gordon, Midlothian Lothian EH20 9TB (GB); DODSON, Henry, Midlothian Lothian EH20 9TB (GB)
(74) Representative: Intès, Didier Gérard André
(86) International application number: PCT/JP2012/007850
(87) International publication number: WO 2014/087459

(56) References cited:
- WO-A1-2012/022924
- GB-A- 2 482 879

## Description

### Technical Field

The present invention relates to a fluid working machine such as a hydraulic pump and a hydraulic motor, and also to a wind turbine generator using the fluid working machine.

### Background Art

In recent years, from a perspective of preserving the environment, it has become popular to use a power generating apparatus of renewable energy type such as a wind turbine generator utilizing wind power. In the wind turbine generator, kinetic energy of the wind is converted to rotational energy of the rotor and the rotational energy of the rotor is then converted into electric power by the generator.

In this type of wind turbine generator, a step-up gear was often used as a drive train.

However, with increasing size of the wind turbine generator, a wind turbine generator equipped with a hydraulic transmission using a fluid working machine such as a hydraulic motor is becoming popular in the light of weight and cost thereof.

In this type of fluid working machine, as shown in Patent Literature 1, the reciprocating motion of the piston in the cylinder causes the cylinder and the piston to move frictionally against each other, thereby causing the wear thereof. Further, Patent Literature 2 through Patent Literature 5 disclose that, although it is not a fluid working machine for the hydraulic motor or the like, there is friction generated between the cylinder and the piston in a internal combustion engine for an automobile or the like.

### WO 2012/022924 is considered as the closest prior art to the subject-matter of claim 1.

### Citation List

### Patent Literature

PTL 1: JP63-212779 A
PTL 2: JP2004-176584
PTL 3: US 2009/0090325 A
PTL 4: JP2008-14404 A
PTL 5: US 2008/0000443 A

### Summary of Invention

### Technical Problem

As a method for reducing the wear of the piston and the cylinder, a variety of methods have been proposed. For instance, in an internal combustion engine, a method for reducing the wear between the piston and the cylinder by dispersing lubricant oil to a reciprocating piston in the cylinder from an oil pan arranged below the piston and then forming a lubricant film in a gap between the piston and the cylinder by the lubricant oil drawn therein. Application of this lubrication method to the fluid working machine, requires an oil pan or the like to be arranged inside the machine. This complicates the structure of the fluid working machine and also increases the cost thereof. Meanwhile, in a mechanism using the working fluid, such as the fluid working machine, it is desired to effectively reduce the wear while appropriately utilizing fluidity of the working fluid.

In view of the above issues, it is an object of at least some embodiments of the present invention, to provide a fluid working machine and a wind turbine generator, which has a long lifetime increased by reducing wear generated between the piston and the cylinder with a simple structure.

### Solution to Problem

According to some embodiments of the present invention, a fluid working machine comprises a rotation shaft, at least one cylinder, at least one piston, at least one cam, at least one cam chamber and at least one drive rod. The piston reciprocates along an axial direction of the cylinder and forms a working chamber with the cylinder and a piston ring provided on an outer circumference of the piston. The cam rotates with the rotation shaft. The cam chamber houses the cam and is sealed from an external atmosphere. The drive rod has one end engaged with the piston such that an angle of the drive rod with respect to the axial direction of the cylinder is changeable and has other end contacting the cam. A working fluid pressure in the working chamber is set constantly higher than a working fluid pressure in the cam chamber so that the working fluid is supplied from the working chamber to the cam chamber via a gap formed between the cylinder and the piston.

In the above fluid working machine, the working fluid pressure in the working chamber is always set higher than the working fluid pressure in the cam chamber. Thus, with use of the difference of the working fluid pressure between the working chamber and the cam chamber, the working fluid in the working chamber leaks to the cam chamber via a gap formed between the cylinder and the piston ring provided on the outer circumference of the piston inclining within the cylinder. The gap, for instance, is an annular gap existing along the circumference direction of the cylinder. As a result, the fluid film is formed in the gap, thereby preventing the piston from directly contacting the cylinder.

In this manner, in the above fluid working machine, by introducing the working fluid to the gap between the piston and the cylinder by the pressure difference of the working fluid between the working chamber and the cam chamber, it is possible to effectively reduce the wear in the gap with a simple structure.

As the working fluid pressure in the working chamber is always set higher than the working fluid pressure in the cam chamber, the fluid working machine is configured such that the force is received only by the piston on the working chamber side out of the engaging part of the drive rod and the piston holding the engaging part. Thus, the piston head part (on the working chamber side) is prone to wear.

In such a case that the piston is pressed up in response to introduction of high pressure working fluid to the working chamber, a large pressure difference is created between the working chamber and the cam chamber. Thus, in accordance with change in the angle of the piston in the cylinder, the leaking of the working fluid from the working chamber to the cam chamber via the gap, is enhanced. In the case where the piston is pressed up, a force received by the cylinder from the piston is large and thus, creating such a state that the piston is prone to wear and sticking with respect to the cylinder. Even in such a case that the piston is pressed up in response to introduction of low pressure working fluid into the working chamber, there is still a small pressure difference between the working chamber and the cam chamber. Thus, in accordance with change in the angle of the piston in the cylinder, the working fluid continues to leak from the working chamber to the cam chamber via the gap. In the case where the piston is pressed up, the friction of the piston with respect to the cylinder is basically small. However, at timing just before the piston reaches a top dead center, the working chamber is in a state of transiently functioning as a pump and thus, the working fluid pressure in the working chamber increases and the piston is prone to wear with respect to the cylinder. In this case, the force loaded on the cylinder from the piston increases relative to the supply of the working fluid to the gap and thus, the wear is likely to take place.

According to an embodiment, the fluid working machine further comprises a high pressure line, a low pressure line, a tank, a supply line with a replenishing pump and a drain line. The high pressure line and the low pressure line are in communication with the working chamber. The tank is open to atmosphere and in communication with the low pressure line so as to generate a prescribed pressure difference between the tank and the low pressure line. The supply line comprises the replenishing pump which pumps the working fluid stored in the tank to the low pressure line so as to generate a prescribed pressure difference between the tank and the low pressure line. The drain line is connected to the tank so that a pressure difference between the cam chamber and the tank is smaller than the prescribed pressure difference.

In the above fluid working machine, the working fluid is pumped by the replenishing pump to the low pressure line from the tank open to the atmosphere. Thus, the working fluid pressure of the low pressure line becomes higher than that of the tank. The working fluid flowing in the low pressure line is partially introduced to the cam chamber. For instance, a part of the working fluid is introduced from the low pressure line to the cam chamber so that the introduced working fluid is cooled and then used to cool the bearing, the cam chamber or the like. Then, the working fluid is drained to the tank from the cam chamber via the drain line. In this manner, by providing the supply line and the drain line, a flow of the working fluid is formed for draining the working fluid from the low pressure line through the cam chamber to the tank. In this case, the working fluid pressure of the cam chamber is at a value intermediate between the working fluid pressure of the low pressure line and the working fluid pressure of the tank, rather closer to the working fluid pressure of the tank.

In the above fluid working machine, the working fluid pressure of the cam chamber becomes lower than the working fluid pressure of the low pressure line. Thus, with the simple structure of connecting the supply line and the drain line to the cam chamber, the working fluid pressure of the working chamber can be set higher than the working fluid pressure of the cam chamber.

According to an embodiment, the supply line diverges from the low pressure line, the supply line cooling the working fluid introduced from the low pressure line and then supplying the working fluid to the cam chamber and a bearing for supporting the rotation shaft.

As a result, the working fluid flowing in the supply line can be used to lubricate and cool the bearing. Further, the bearing can be lubricated and cooled with the simple structure.

According to an embodiment, at least one of a surface of the piston or a surface of the cylinder facing the piston is hardened.

In the above fluid working machine, by hardening at least one of the surface of the piston or the surface of the cylinder facing the piston, it is possible to reduce the wear generated therebetween.

According to an embodiment, at least one of a surface of the piston or an engagement surface of the drive rod engaging with the piston may be hardened.

In the above fluid working machine, by hardening at least one of the surface of the piston or the engagement surface of the drive rod engaging with the piston, it is possible to reduce the wear generated therebetween.

According to an embodiment, the surface of the cylinder and the engagement surface of the drive rod may be hardened by carburizing. The hardening of the parts may be performed by nitrocarburizing and induction-hardening or the like.

According to an embodiment, a piston ring groove is formed on a side surface of the piston along a circumferential direction and a piston ring is fitted in the piston groove, and the side surface of the piston is crowned from the piston groove or a position between a top surface of the piston and the piston ring groove to the top surface so that the piston decreases in diameter with distance from the position toward the top surface. The piston inclines about the piston ring groove as a fulcrum and thus, the piston top comes closest to the cylinder. Therefore, by crowning this area of the piston, it is possible to prevent the wear of the piston and the cylinder effectively.

Particularly, at the timing just before the piston reaches the top dead center, the working chamber is in a state of temporarily functioning as a pump and thus, the working fluid pressure in the working chamber increases. As a result, the piston likely inclines in the cylinder, thereby generating the wear thereof. In this case, the force loaded on the cylinder from the piston increases relative to the supply of the working fluid to the gap and thus, the wear is likely to take place.

In the above fluid working machine, by crowning the outer periphery of the roller holding part, even when the pressing force from the cam causes the above piston to incline, the outer periphery of the piston contacts the cylinder surface to effectively prevent progression of the wear.

Further, for an amount corresponding to the reduction in diameter of the piston reduced by crowning, it is possible to obtain larger gap between the piston and the cylinder. As a result, a thicker liquid film can be formed by the working fluid introduced from the working chamber and thus, the wear can be effectively prevented.

Furthermore, as the working fluid has viscosity, the working fluid in the working chamber is drawn to the gap between the piston and the cylinder in response to the movement of the piston reciprocating in the cylinder. In the above fluid working machine, the outer periphery of the roller holding part is crowned and thus, the gap becomes narrower with distance from the working chamber. Therefore, the reciprocating of the piston in the cylinder draws the working fluid to the outer periphery of the roller holding part having the above configuration, generating a hydrostatic oil pressure. As a result, the wear in the gap can be reduced.

Although a cam side of the piston is not subjected to a significant force, the cam side of the piston may still be crowned to prevent the piston from contacting the cylinder.

According to an embodiment, in such a case that the piston inclines with respect to the cylinder in an area of the gap in accordance with change of an angle of the drive rod with respect to the cylinder axis, the working fluid leaks to the cam chamber via a piston top side of the gap so as to form a fluid film in the gap, And the piston is prevented by the fluid film from directly contacting the cylinder.

According to an embodiment, a piston ring groove may be formed on a side surface of the piston along a circumferential direction and a piston ring is fitted in the piston groove, and the side surface of the piston may be crowned so that the piston decreases in diameter with distance from the piston ring groove toward a top surface of the piston.

According to an embodiment, the gap may be set at 0.05% to 0.15% of a diameter of the piston.

According to research conducted by the inventors, in a fluid working machine having an eccentric cam and a drive rod, it was found by way of experiment that the wear of the cylinder and the piston could be effectively reduced by setting the gap at 0.05% to 0.15% of a diameter of the piston by taking into account the inclination of the piston in the cylinder. The results of the research show that by setting the diameter of the piston in the above range, the working fluid can be smoothly introduced to the gap with use of the pressure difference between the working chamber and the cam chamber, thereby forming the fluid film in a stable manner.

According to an embodiment, the piston and the drive rod comprises an inner passage for supplying the working fluid from the working chamber to a contact surface between the drive rod and the cam.

In the above fluid working machine, the working fluid is supplied to the contact surface from the working chamber. As the working fluid has viscosity, the sliding of the drive rod and the piston at the contact surface causes the working fluid to be drawn onto the contact surface, thereby generating a hydrostatic oil pressure thereon. The hydrostatic oil pressure generated on the contact surface supports the load applied to the piston from the drive rod. As a result, it is possible to effectively reduce wear on the contact surface.

In such a case that the piston is pressed up in response to introduction of high pressure working fluid to the working chamber, a large pressure difference is created between the working chamber and the cam chamber. This pressure difference promotes supplying of the working fluid to the contact surface. In contrast, in such a case that the piston is pressed up in response to introduction of low pressure working fluid into the working chamber, there is still a small pressure difference between the working chamber and the cam chamber. Thus, the working fluid continues to be supplied to the contact surface.

According to an embodiment, the above fluid working machine further comprises an orifice for adjusting a flow of the working fluid in the inner passage.

In the above fluid working machine, by providing the orifice, it is possible to adjust the flow of the working fluid to the contact surface through the inner passage.

According to an embodiment, the inner passage comprises a first inner passage and a second inner passage. The first inner passage is formed in the piston and supplies the working fluid from the working chamber to an engagement surface between the piston and the drive rod. The second inner passage is formed in the drive rod and supplies the working fluid from the engagement surface to the contact surface. The first inner passage has a greater cross-sectional area than the second inner passage.

In the above fluid working machine, the first inner passage formed in the piston has a greater cross-sectional area than the second inner passage formed in the drive rod. As a result, even when the drive rod inclines with respect to the cylinder axis in response to the rotation of the cam, it is possible to secure the communication between the first inner passage and the second inner passage. As a result, with or without the inclination of the drive rod with respect to the cylinder axis, it is possible to supply the working fluid to the contact surface constantly and also to effectively reduce the wear generated in the contact surface.

According to an embodiment, a plurality of the cylinders, the pistons and the drive rods are radially arranged along a radial direction of the cam.

In the above working fluid machine, although the pressing force is transmitted to the piston from the cam via the drive rod, it is possible to effectively reduce the wear of the piston and the cylinder with the simple structure by introducing the working fluid to the gap from the working chamber.

According to an embodiment of the present invention, a wind turbine generator comprises a hub on which the blade is mounted, a main shaft which is connected to the hub, a hydraulic pump which is attached to the main shaft; at least one hydraulic motor which is driven by pressurized oil supplied from the hydraulic pump; and at least one generator which is coupled to the hydraulic motor. At least one of the hydraulic pump or the hydraulic motor is the above-described fluid working machine.

The above fluid working machine may be applied to a wind turbine generator for generating power from wind in a form of renewable energy.

### Advantageous Effects of Invention

According to at least one embodiment, the working fluid pressure of the working chamber is set higher than the working fluid pressure of the cam chamber. Thus, by the difference of the working fluid pressure between the working chamber and the cam chamber, the working fluid in the working chamber can be partially introduced to the gap formed between the cylinder and the piston. As a result, the fluid film is formed in the gap, thereby preventing the piston from directly contacting the cylinder.

In this manner, by using the difference of the working fluid pressure between the working chamber and the cam chamber, the working fluid is introduced to the gas between the piston and the cylinder. Thus, it is possible to effectively reduce the wear in the gap with the simple mechanism.

### Brief Description of Drawings

[fig.1]Fig. 1 is a schematic view of an overall structure of a wind turbine generator.
[fig.2]Fig. 2 is an illustration of an example configuration of an oil line in the wind turbine generator.
[fig.3]Fig.3 is an illustration of an inner structure of a hydraulic motor.
[fig.4A]Fig. 4A is a view of a piston from outside in a radial direction of an eccentric cam.
[fig.4B]Fig. 4B is a cross-sectional view of the piston taken along the radial direction of the eccentric cam.
[fig.4C]Fig. 4C is a view of the piston taken from a rotation axis of the eccentric cam..
[fig.5]Fig. 5 is a schematic illustration of a flow of working fluid near a gap formed between the piston and a cylinder.
[fig.6A]Fig. 6A is a side view of an example structure of the piston.
[fig.6B]Fig. 6B is a side view of another example structure of the piston.
[fig.7]Fig. 7 is a cross-sectional view showing a general sectional structure of the piston, the cylinder and a drive rod.

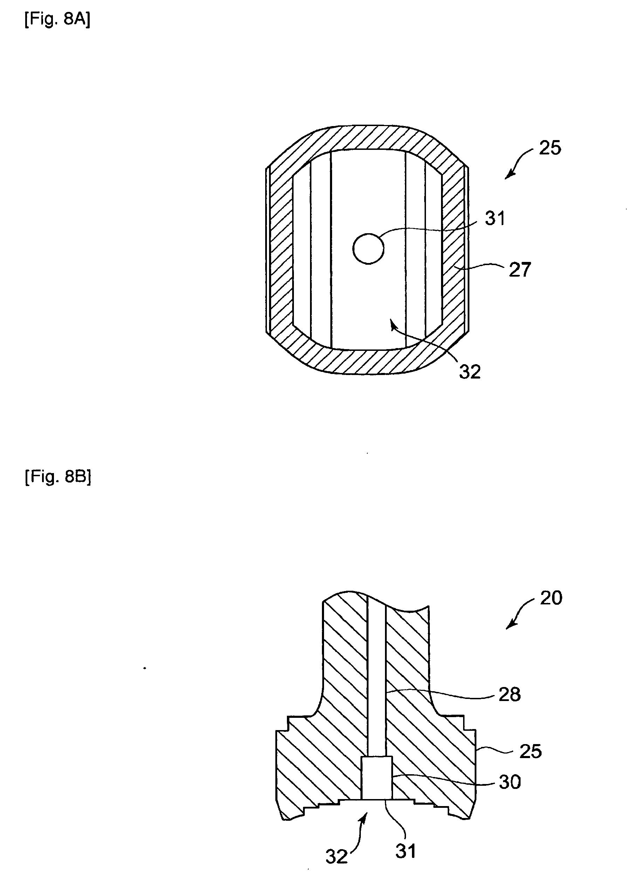

[fig.8A]Fig. 8A is an illustration of a configuration of a working oil sump taken from inside in the radial direction of the eccentric cam.
[fig.8B]Fig. 8B is a cross-sectional view of the working oil sump taken along the radial direction of the eccentric cam.

### Description of Embodiments

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

In following embodiments, a wind turbine generator is described as one example of a power generating apparatus of renewable energy type. However, this is not limitative and the present invention is applicable to other types of power generating apparatus of renewable energy type such as a tidal generator, an ocean current generator and a river current generator.

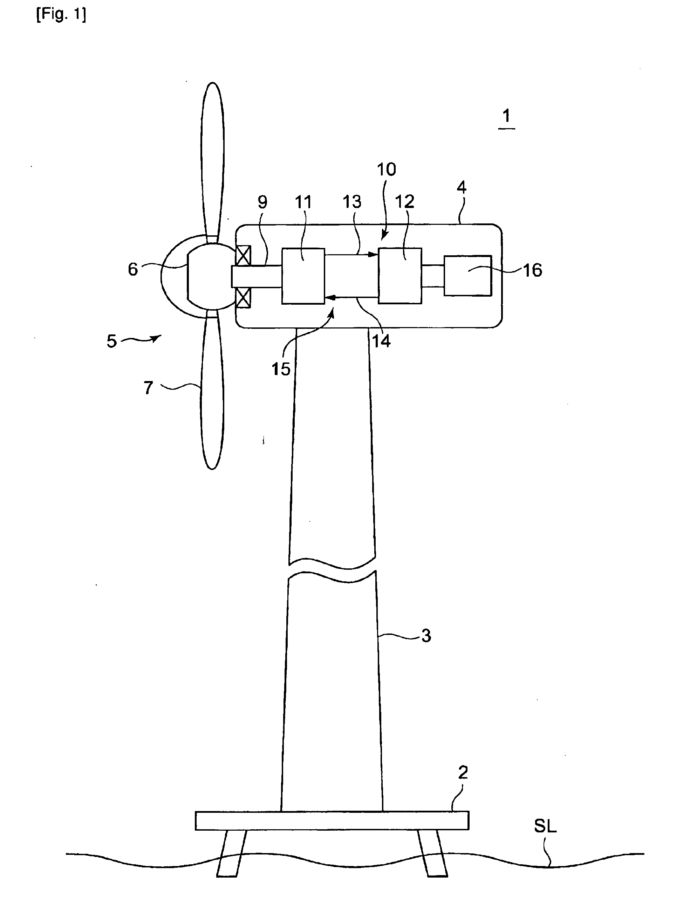

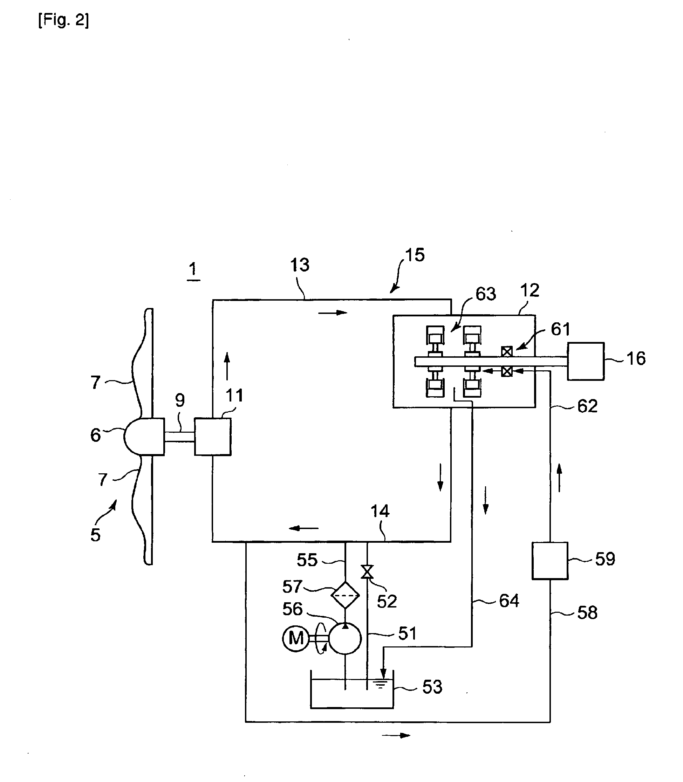

The wind turbine generator regarding an embodiment of the present invention is described in reference Fig. 1 and Fig.2. Fig. 1 is a schematic view of an overall structure of the wind turbine generator. Fig. 2 is an illustration of an example configuration of an oil line in the wind turbine generator.

As shown in Fig.1, the wind turbine generator 1 is mainly provided with a tower 3 installed on a foundation 2, a nacelle 4 supported by the tower 3 and a rotor 5 rotating by wind energy.
Fig. 1 shows an exemplary case where the wind turbine generator 1 is installed on a sea level SL as an offshore wind turbine generator. However, the wind turbine generator 1 is installable on shore.

The rotor 5 is formed with at least one blade 7 (for instance, three blades) and a hub 6 supporting the blade 7. The hub 6 is connected to a rotation shaft 9 housed in the nacelle 4. As a result, the rotor 5 rotates upon receiving wind on the blade 7, thereby rotating the rotation shaft 9 connected to the hub 6.

The nacelle 4 houses a hydraulic transmission 10 and a generator 16.

As shown in Fig.2, the hydraulic transmission 10 includes a hydraulic pump 11 connected to the rotation shaft 9, a hydraulic motor 12 connected to the generator 16, and an oil line 15 provided between the hydraulic pump 11 and the hydraulic motor 12. The oil line 15 is formed by a high pressure oil line 13 for connecting a discharge side of the hydraulic pump 11 to an intake side of the hydraulic motor 12, and a low pressure oil line 14 for connecting a discharge side of the hydraulic motor 12 to an intake side of the hydraulic pump 11.

The hydraulic pump 11 is driven by the rotation shaft 9 to generate operating oil of high pressure. This operating oil of high pressure is supplied to the hydraulic motor 12 via the high pressure oil line 13 to drive the hydraulic motor 12 by the operating oil of high pressure. Meanwhile, the generator 16 connected to the hydraulic motor 12 is driven to generate electric power. The operating oil drained from the hydraulic motor 12 is supplied to the hydraulic pump 11 via the low pressure oil line 14 to pressurize the operating oil again in the hydraulic pump 11 and then the operating oil having been pressurized is supplied to the hydraulic motor 12. The hydraulic motor is described later in details.

In the low pressure oil line 14, an oil replenishing mechanism may be provided to adjust a flow of circulating operating oil. The oil replenishing mechanism includes a return line 51, a low pressure relief valve 52, an oil tank 53, a replenishing line 55, a boost pump 56, and an oil filter.

The replenishing line 55 connects the oil tank 53 to the low pressure oil line 14. The oil tank 53 reserves the operating oil for replenishment. This oil tank 53 may be open to the atmosphere.

The boost pump 56 is provided in the replenishing line 55 to replenish the operating oil to the low pressure oil line 14 from the oil tank 53. More specifically, the boost pump 56 functions as a replenishing pump for the low pressure oil line 14. In this case, the operating oil to be supplied to the low pressure oil line 14 passes through the oil filter 57 provided in the replenishing line 55 to remove impurities.

As a result, even when the operating oil leaks inside the hydraulic transmission 10, the low pressure oil line 14 is replenished with the operating oil from the oil tank 53 by the boost pump 56. Thus, the amount of the operating oil circulating in the hydraulic transmission 10 can be maintained.

The return line 51 is arranged between the oil tank 53 and the low pressure oil line. In the return line 51, the low pressure relief valve 52 is provided so as to maintain the pressure in the low pressure oil line 14 near a setting pressure.

As a result, in such a case that the operating oil is supplied to the low pressure oil line 14 by the boost pump 56, once the pressure in the low pressure oil line 14 reaches the setting pressure of the low pressure relief valve 52, the low pressure relief valve 52 automatically opens to release the operating oil to the oil tank 53 via the return line 51. Thus, the amount of the operating oil circulating in the hydraulic transmission 10 can be appropriately maintained.

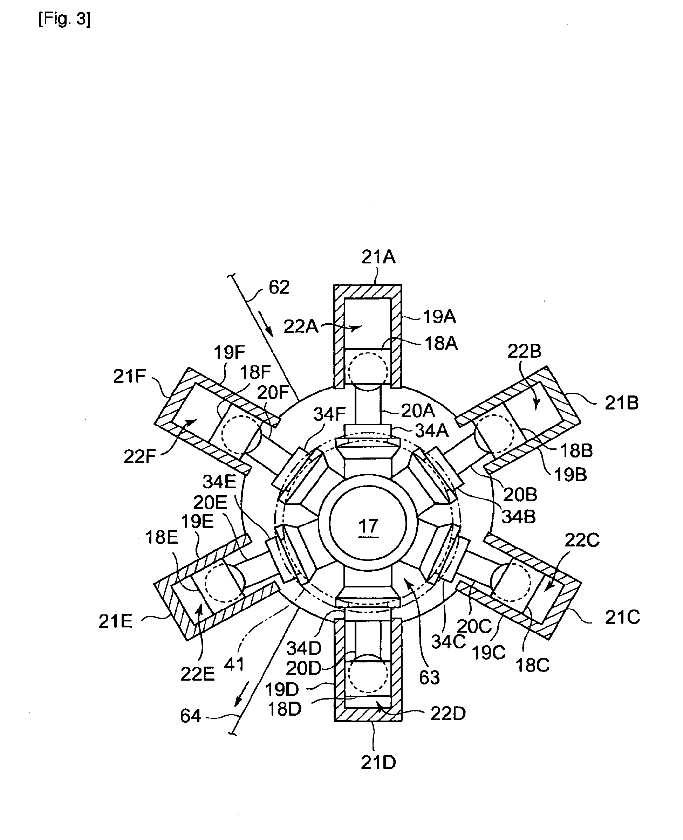

To the low pressure oil line 14, an oil cooler 59 for cooling the operating oil may be connected via a bypass line 58. The oil cooler 59 cools the operating oil by heat exchange with cooling medium. In the bypass line 58, a supply line 62 is formed on a downstream of the oil cooler 59. Through the bypass line, the operating oil is supplied via a bearing 61 for supporting the rotation shaft of the hydraulic motor 12 to a cam chamber 63 housing the eccentric cam 17 (see Fig.3) rotating with the rotation shaft. The cam chamber 63 is filled with the operating oil and excess operating oil is drained via a drain line 64 to the oil tank 53 open to the atmosphere.

To the low pressure oil line 14, the operating oil is pumped by the boost pump 56 from the oil tank 53 and thus, a setting pressure of the low pressure oil line 14 is set higher than that of the oil tank 53 open to the atmosphere. As a result, based on a pressure difference of the operating oil between the low pressure oil line 14 and the oil tank 53, the operating oil flows through the bypass line 58, the supply line 62 and the drain line 64. The operating oil pressure in the cam chamber 63 is a value intermediate between the operating oil pressure of the low pressure oil line 14 and the operating oil pressure of the oil tank 53.

Thus, the operating oil pressure in the cam chamber 63 becomes lower than the operating oil pressure of the working chamber 20 which is described later. In this manner, with a simple structure of connecting the supply line 62 and the drain line 64 to the cam chamber 63, the operating oil pressure in the working chamber 20 can be set higher than the operating oil pressure in the cam chamber 63.

The supply line 62 communicates with the cam chamber 63 via the bearing 61. As a result, the bearing 61 can be lubricated by the operating oil flowing in the supply line. Thus, it is possible to adjust the operating oil pressure in the cam chamber 63 and also to lubricate the bearing 61 with the simple structure.

Fig.3 is an illustration of an inner structure of the hydraulic motor 12. In the following description, the hydraulic motor 12 is explained as an example of the fluid working apparatus. However, the same structure is applicable to the hydraulic pump 11 as well.

The hydraulic motor 12 includes an eccentric cam 17 rotating with a rotary shaft of the generator 16, pistons 18A to 18F, cylinders 19A to 19F and drive rods 20A to 20F for transmitting reciprocating motions of the pistons 19A to 19F to the eccentric cam 17. The pistons 18A to 18F and the cylinders 19A to 19F form working chambers 22A to 22F with cylinder heads 21A to 21F, respectively.

The eccentric cam 17 is housed in the cam chamber 63 filled with lubricating oil. The operating oil is supplied to the cam chamber 63 via the oil line 62 and the cam chamber 63 is filled with the operating oil. The excess operating oil from the cam chamber 63 is drained via the drain line 64 to the oil tank 53 open to the atmosphere.

The piston 18A to 18F, the cylinders 19A to 19F and the drive rods 20A to 20F are provided radially around the eccentric cam 17. The pistons 18A to 18F are caused to reciprocate at different phase by the operating oil within the working chambers 22A to 22F and the eccentric cam 17. More specifically, while each of the pistons 18A to 18F moves from a top dead center toward a bottom dead center, the piston 18A to 18F is pressed down toward the eccentric cam 17 along a cylinder axis by the operating oil introduced to the corresponding working chamber 22A to 22F from the high pressure oil line 13. In this process, the drive rod 20A to 20F corresponding to the piston 18A to 18F presses the eccentric cam 17, thereby rotating the eccentric cam 17. Upon rotation of the eccentric cam 17, the piston 18A to 18F positioned near the bottom dead center is pressed up by the eccentric cam 17 via the drive rod 20A to 20F to discharge the operating oil from the working chamber 22A to 22F to the low pressure oil line 14.

By the periodic reciprocation of the pistons 18A to 18F as described above, the rotary shaft of the generator 16 connected to the eccentric cam 17 rotates.

In the following description, the pistons 18A to 18F are collectively described as the piston 18, the cylinders 19A to 19F are collectively described as the cylinder 19, the drive rods 20A to 20F are collectively described as the drive rod 20, the cylinder heads 21A to 21F are collectively described as the cylinder head 21 and the working chambers 22A to 22F are collectively described as the working chamber 22.

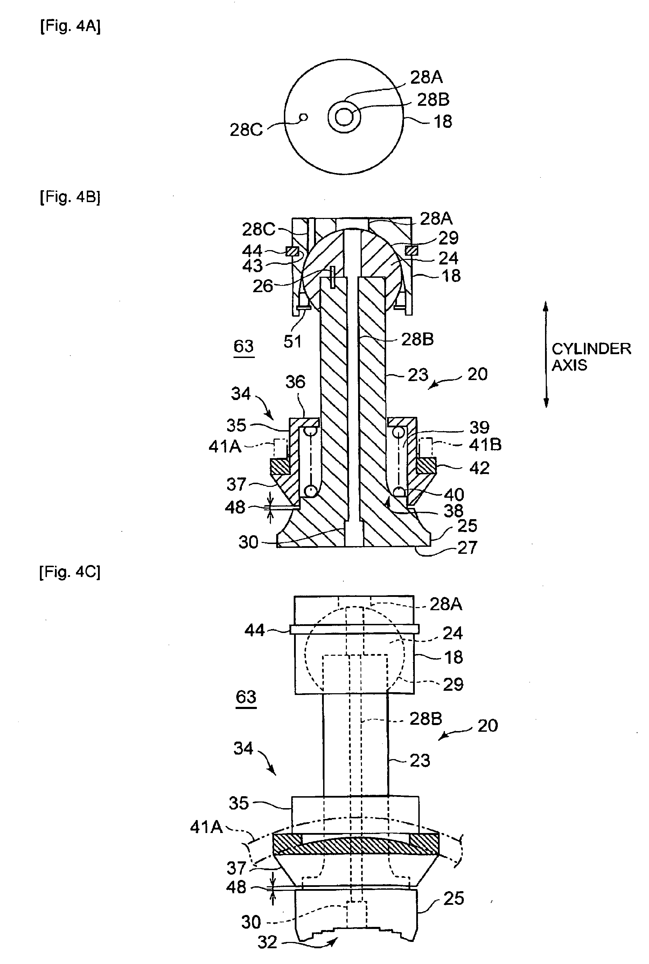

Fig.4A is an illustration of a structure around the piston 18 from the outside in the radial direction of the eccentric cam 17. Fig.4B is a cross-sectional view of the structure taken along the radial direction of the eccentric cam 17. Fig.4C is an illustration of the structure taken in a rotation direction of the eccentric cam 17.

On the outer circumferential surface of the piston 18 reciprocating in the cylinder 19, a piston ring groove 43 is formed along the circumferential direction. In the piston ring groove 43, a piston ring 44 is fitted for purposes such as regulating the leaking of the operating oil in the working chamber 20, or the like.

The drive rod 20 includes a main part 23 extending along the axial direction of the cylinder 19, an engaging part 24 formed at one end of the main part 23 (on an outer side in the radial direction of the eccentric cam 17), and a contact part 25 formed at the other end of the main part 23 (on an inner side in the radial direction of the eccentric cam 17).

The main part 23 extends approximately parallel to the radial direction of the eccentric cam 17 and transmits the reciprocating motion of the piston 18 to the eccentric cam side.

The engaging part 24 functions to engage the main part 23 with the piston 18. The engaging part 24 is configured to be held to the piston 18 by a fixing pin 51 from the inside in the radial direction of the eccentric cam 17. In one embodiment, the engaging part 24 has a spherical shape and is configured so that an angle of the drive rod 20 with respect to the cylinder axis is changeable.

By the contact part 25 coming into contact with the eccentric cam 17, the reciprocating motion of the piston 18 is converted into the rotating motion of the eccentric cam 17. In one embodiment, by configuring the contact part 25 with a diameter larger than the main part 23, a stepped portion 38 is formed on the outer circumferential surface of the drive rod 20.

The hydraulic motor 12, herein, includes a plurality of holding members 34A to 34F. The holding members 34A to 34F are each arranged around the main part 23 of the drive rod 20 to surround the main part 23, extending along the direction of the cylinder axis. In the following description, the holding members 34A to 34F are collectively described as the holding member 34.

The holding member 34 includes a cylindrical part 35 surrounding the main part 23 of the drive rod 20 while extending in the axial direction of the cylinder, an inward flange part 36 provided at one end of the cylindrical part 35 on an outer circumferential side in the radial direction of the eccentric cam 17, and an outward flange part 37 provided at the other end of the cylindrical part 35 on an inner circumferential side in the radial direction of the eccentric cam 17.

In an annular space 39 formed by the stepped portion 38 and the holding member 34, a pressing member 40 is arranged. The pressing member 40 is, for instance, a spring member and presses the inward flange part 36 of the holding member 34 in a direction of moving away from the stepped portion 38.

The pressing member 40 is housed in the annular space 39 surrounded by the cylindrical part 35 of the holding member 34. Thus, during the operation of the hydraulic motor 12, it is possible to prevent the pressing member 40 from interfering with nearby parts, thereby achieving an excellent reliability of the machine.

Between the outward flange part 37 and the drive rod 20 (the stepped portion 38), a clearance 48 is provided. The clearance 48 is set in advance so that, during the normal operation of the hydraulic motor 12, an infinite value (for instance, a few millimeters) still exists even when the pressing member 40 is in the most compressed state. In this manner, by providing the clearance 48, it is possible to absorb shock caused by a movement of the holding member 34 along the drive rod 20, which results in wear thereof, and also possible to absorb a manufacturing error of the parts.

In such a case that the hydraulic motor 12 abnormally operates for some reason and the pressing member 40 is deformed beyond an expected range, the clearance 48 vanishes and then the outward flange part 37 contacts the drive rod 20 to restrict over-deformation of the pressing member 40. As a result, even when there is abnormality such as a failure of components, it is possible to restrict the deformation of the pressing member 40 within the expected range and also to prevent the holding ring 41 and the holding member 34 from moving unexpectedly, thereby preventing the abnormality from developing into a serious failure.

A plurality of the pressing member 40 is provided corresponding to the drive rods 20A to 20F. The holding members 34A to 34F are pressed up outwardly in the radial direction of the eccentric cam 17 by the pressing members 40A to 40F while being held inwardly by the holding ring 41. Thus, the drive rods 20A to 20F are pressed against the eccentric cam 17 by reaction from the pressing members 40A to 40F. As a result, it is possible to maintain the contact between the drive rods 20A to 20F and the eccentric cam 17 regardless of the rotational phase of the eccentric cam 17. Therefore, it is possible to reduce the wear of the drive rods 20A to 20F as well as the wear of the eccentric cam 17.

The operation of the hydraulic motor 12 is explained in reference to Fig.3.

In the hydraulic motor 12, the eccentric cam 17 rotates with the rotary shaft of the generator 16. For instance, with focus on the drive rod 20D, the rotation of the eccentric cam 17 presses up the drive rod 20D outwardly in the radial direction of the eccentric cam 17. After being pressed up, the drive rod 20D presses the holding ring 41 via the pressing member 40D outwardly in the radial direction of the eccentric cam 17. In this manner, the holding ring 41 moves downward in Fig.3.

Meanwhile, with focus on the drive rod 20A located on an opposite phase side from the drive rod 20D, the drive rod 20A is not subjected to the pressing force from the eccentric cam 17. As the holding ring 41 moves downward in Fig.3 as explained above, causing the holding member 34A to be pressed down inwardly in the radial direction of the eccentric cam 17. In this manner, the force acting to press down the holding member 34A is transmitted to the drive rod 20A via the pressing member 34A. As a result, the drive rod 20A is pressed against the eccentric cam 17, thereby maintaining the contact therebetween.

In this manner, during the operation of the hydraulic motor 12, the holding ring 41 rotates to be approximately concentric with the eccentric cam 17 in response to the rotation of the eccentric cam 17.

Between the holding ring 41 and the outward flange part 37, a slide member 42 is provided. The slide member 42 may be formed to surround the cylindrical part 35 along the outward flange part 37. The holding ring 41 is not fixed to the holding member 34 and thus, during the operation of the hydraulic motor 12, the holding ring 41 moves with respect the holding member 34 to some extent in response to the rotation of the eccentric cam 17. For instance, the drive rod 20 contacts the eccentric cam 17 and operates while changing its angle with respect to the cylinder axis. In response to this, the holding ring 41 is subjected to an abrasion force to some extent via the holding member 34 provided on the drive rod 20 and rotates frontward and rearward in the axial direction of the holding ring 41.

The slide member 42 is, for instance, made of PEEK material (Polyether ether ketone). By arranging this slide member 42 between the holding ring 41 and the holding member 34, it is possible to reduce the wear of the holding ring 41 and the holding member 34.

The holding member 34 and the holding ring 41 are, for instance, made of metal. The holding member 34 may be made of aluminium and the holding ring 41 may be made of iron.

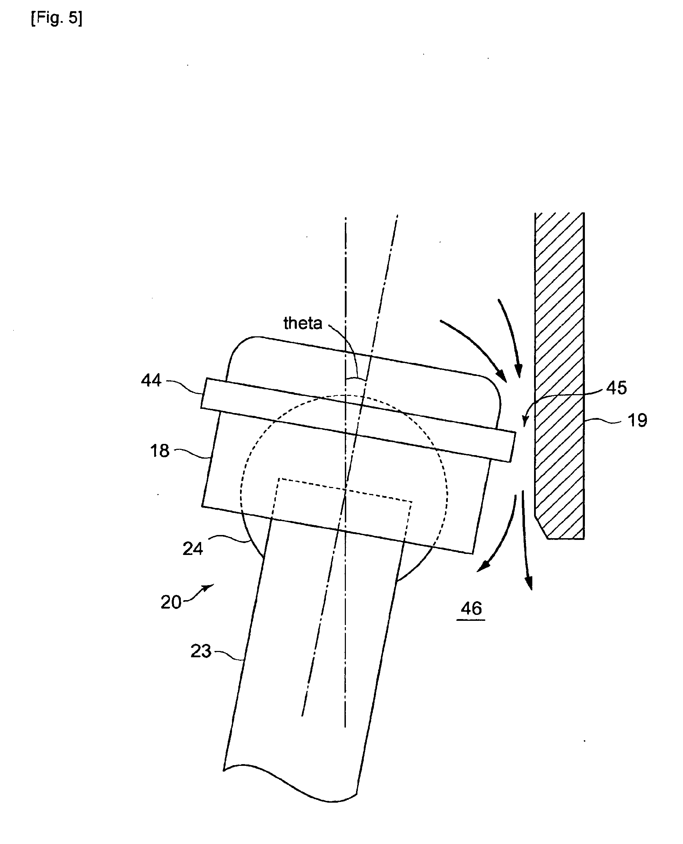

Fig. 5 is a schematic illustration of the flow of the operating oil near a gap 45 formed between the piston 18 and a cylinder 19. In the case shown in Fig.5, the piston 18 inclines with respect to the cylinder axis by an angle theta, as the piston 18 is subjected to the diagonal pressing force from the eccentric cam 17 via the drive rod 20. The inclination of the piston 18 increases the risk of progression of the wear from the piston 18 directly contacting the cylinder 19. However, in the present embodiment, it is possible to reduce the risk by achieving lubricating action as described below.

The pressure of the operating oil in the cam chamber 63 is set lower than the pressure of the operating oil in the working chamber. As a result, a part of the operating oil in the working chamber 20 is lead to the gap 45 by the pressure difference of the operating oil between the working chamber 20 and the cam chamber 63. The gap 45 is formed between the outer circumferential surface of the piston 18 and the inner wall of the cylinder 19(see the arrows in Fig.5). The operating oil lead to the gap 45 forms a fluid, thereby preventing the piston 18 from directly contacting the cylinder 19 and reducing the wear of the piston 18 and the cylinder 19.

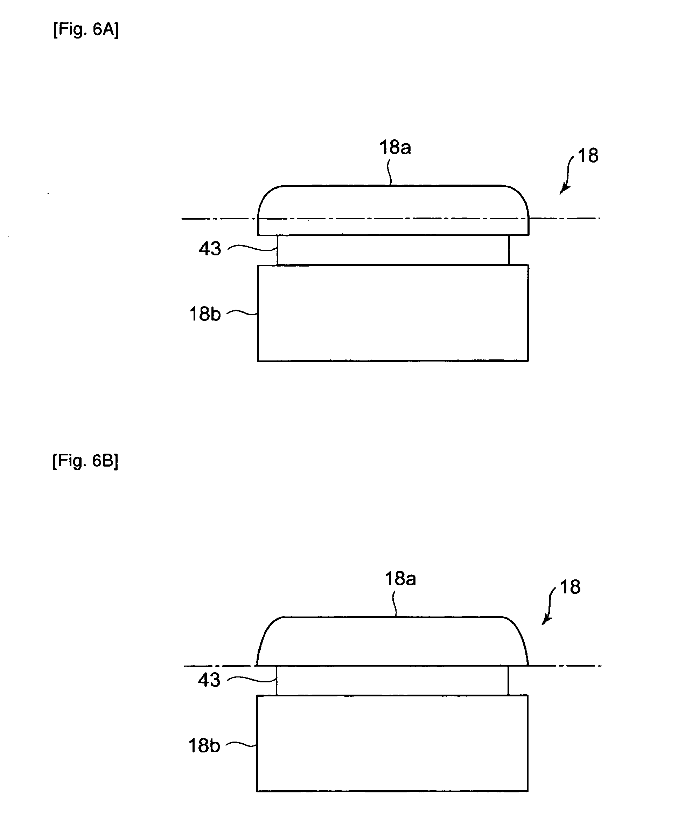

Fig.6A is an illustration of a side geometry of the piston 18. For the purpose of simplifying the explanation, the piston 18 is overdrawn in Fig.6A. An outer periphery 18b of the piston 18 is crowned so that the piston 18 decreases in diameter from a position between a piston top surface 18a and the piston ring groove 43 toward the piston top surface 18a. In Fig.6A, a starting point of reducing the diameter of the piston 18 is indicated by a dotted line. By crowning the outer periphery 18b of the piston 18 in the above-described area, it is possible to reduce the risk of progression of the wear from the outer periphery 18b of the piston 18 contacting the surface of the cylinder 19 even when the pressing force from the eccentric cam 17 causes the piston 18 to incline as shown in Fig.5, for instance.

For an amount corresponding to the reduction in diameter of the piston 18 reduced by crowning, it is possible to obtain larger gap 45 between the piston 18 and the cylinder 19. As a result, a thicker liquid film can be formed by the operating oil introduced from the working chamber 20 and thus, the wear can be effectively reduced.

As the operating oil has viscosity, the operating oil in the working chamber 20 is drawn to the gap 45 between the piston 18 and the cylinder 19 in response to the movement of the piston 18 reciprocating in the cylinder 19. In the present embodiment, the outer periphery 18b of the piston 18 is crowned and thus, the gap 45 decreases with distance from the working chamber 20. Therefore, the reciprocating of the piston 18 in the cylinder 19 draws the operating oil to the outer periphery 18b of the piston 18 having the above configuration, generating a hydrostatic oil pressure. As a result, wear in the gap 45 can be reduced by the hydrostatic oil pressure.

Fig. 6B is an illustration of another side geometry of the piston 18. For the purpose of simplifying the explanation, the piston 18 is overdrawn in Fig.6B. The outer periphery 18b of the piston 18 is crowned so that the piston 18 decreases in diameter from the piston groove 43 to the piston top surface 18a. In Fig.6B, a starting point of reducing the diameter of the piston 18 is indicated by a dotted line. In comparison to the case shown in Fig.6A, by crowning a large area of the outer periphery 18b of the piston 18, it is possible to further reduce the risk of progression of the wear from the outer periphery 18b of the piston 18 contacting the surface of the cylinder 19.

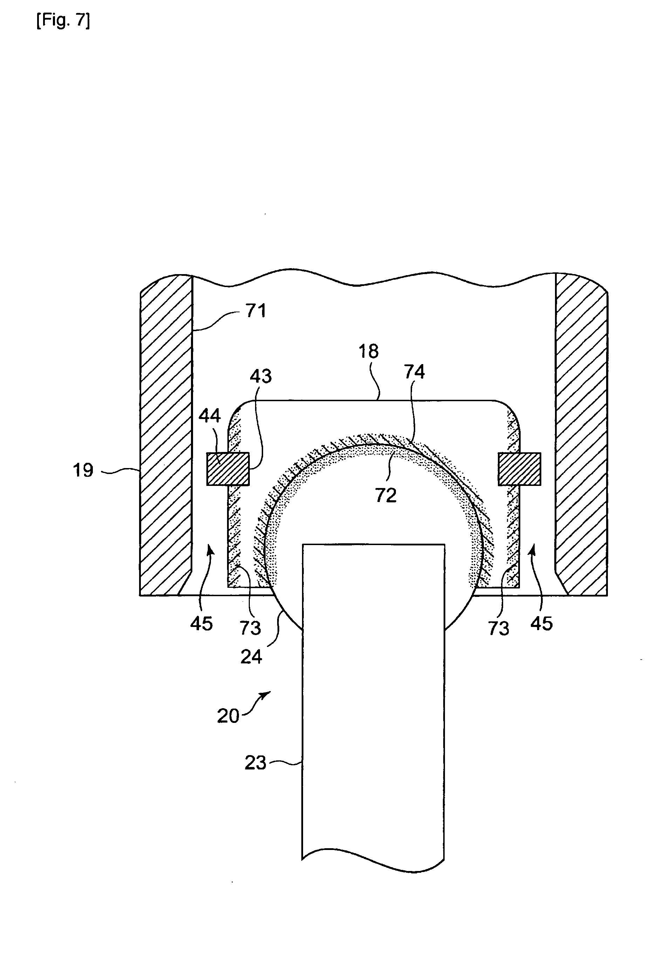

Fig. 7 is a cross-sectional view showing a general sectional structure of the piston 18, the cylinder 19 and the drive rod 20. For the purpose of simplifying the explanation, Fig.7 does not shown details structures of the piston 18, the cylinder 19 and the drive rod 20.

The surface of the cylinder 19 opposite to the piston 18 (see Fig.7, reference numeral 71) and the surface of the drive rod 20 opposite to the piston 18 (see Fig.7, reference numeral 72) are hardened, for instance, by carburizing. In contrast the surfaces 73, 74 of the piston 18 opposite to the surfaces 71, 72 are not hardened. In this manner, by hardening the surfaces so that there is difference in hardness between the piston 18 and the cylinder 19 and between the piston 18 and the drive rod 20. As a result, it is possible to reduce the wear generated therebetween.

In the present embodiment, only the cylinder 19 is hardened out of the piston 18 and the cylinder 19. However, the hardness difference between the piston 18 and the cylinder 19 is sufficiently generated by hardening at least one of the piston 18 or the cylinder 19. More specifically, only the piston 18 may be hardened or both the piston 18 and the cylinder 19 may be hardened so that there is a difference in hardness between the piston 18 and the cylinder 19.

Further, in the present embodiment, only the drive rod (an engagement surface 29) is hardened out of the piston and the drive rod 20 (the engagement surface 29). However, the hardness difference between the piston 18 and the drive rod 20 is sufficiently generated by hardening at least one of the piston 18 or the drive rod 20. More specifically, only the piston 18 may be hardened or both the piston 18 and the drive rod 20 may be hardened so that there is a difference in hardness between the piston 18 and the drive rod 20.

In reference to Fig.4A to Fig.4C, in the piston 18 and the drive rod 20, formed is an inner passage 28 for supplying the operating oil from the working chamber 22 to a contact surface 27 between the drive rod 20 and the eccentric cam 17. The inner passage 28 includes a first inner passage 28A and a second inner passage 28B. The first inner passage 28A is formed in the piston 18. The second inner passage 28B is formed in the drive rod 20. The first inner passage 28A and the second inner passage 28B communicates with each other to supply the operating oil introduced from the working chamber 22 to the contact surface 27.

The first inner passage 28A has a greater cross-sectional area than the second inner passage 28B. As a result, even when the drive rod 20 inclines with respect to the cylinder axis, it is possible to secure the communication between the first inner passage 28A and the second inner passage 28B. As a result, regardless of the rotational phase of the eccentric cam 17, it is possible to supply the operating oil to the contact surface constantly and also to effectively reduce the wear generated in the contact surface 27.

In the piston 18, a third inner passage 28c is also formed for supplying the operating oil from the working chamber to the engagement surface 29 where the piston 18 and the drive rod 20 (the engaging part 24) slide against. As a result, a fluid film is formed on the engagement surface 29, thereby reducing the wear of the piston 18 and the drive rod 20 therebetween.

In the second inner passage 28B, an orifice is provided to regulate a flow of the operating oil introduced from the working chamber 22. As a result, it is possible to regulate the flow of the operating oil to the contact surface so as to achieve a excellent effect of reducing the wear the contact surface 27.

Further, in the example shown in Fig.4A to Fig.4C, the orifice 30 is provided in the second inner passage 28B. However, this is not limitative and the orifice may be provided in one or both of the second inner passage 28A and the third inner passage 28C instead of or in addition to the second inner passage 28B.

On a surface of the drive rod 20 (the contact part 25) facing the eccentric cam 17, the surface is recessed to form a working oil sump 32 in an area including the opening 31 of the inner passage 28. In the working oil sump 32, the operating oil is supplied from the working chamber 22 via the inner passage 28. The operating oil reserved in the working oil sump 32 is drawn onto the contact surface 27 in response to the rotation of the eccentric cam 17 and generate a hydrostatic oil pressure thereon. As a result, the load at the contact surface is supported and the wear can be reduced.

Fig.BA shows a configuration of the working oil sump 32 in the radial direction of the eccentric cam 17 from the inside. Fig.6B shows the configuration of the working oil sump 32 in the circumferential direction of the eccentric cam 17. The working oil sump 32 is formed so that its depth changes in a stepped manner along the circumferential direction of the eccentric cam 17. As a result, it is possible to attain high strength of the contact part 25 of the drive rod 20 when the working oil sump 32 is formed by recessing the surface of the drive rod 20 (the contact pat 25) facing the eccentric cam 17.

While the present invention has been described with reference to exemplary embodiments, it is obvious to those skilled in the art that various changes may be made without departing from the scope of the invention, as defined by the appended claims.

### Reference Signs List

- 1: Wind turbine generator
- 2: Foundation
- 3: Tower
- 4: Nacelle
- 5: Rotor
- 6: Hub
- 7: Blade
- 9: Rotation shaft
- 10: Hydraulic transmission
- 11: Hydraulic pump
- 12: Hydraulic motor
- 13: High pressure oil line
- 14: Low pressure oil line
- 15: Oil line
- 16: Generator
- 17: Eccentric cam
- 18A to 18F: Piston
- 19A to 19F: Cylinder
- 20A to 20F: Drive rod
- 21A to 21F: Cylinder head
- 22A to 22F: Working chamber
- 23: Main part
- 24: Engaging part
- 25: Contact part
- 26: Bolt
- 27: Contact surface
- 28A to 28C: Inner passage
- 29: Engagement surface
- 30: Orifice
- 31: Opening
- 32: Working oil sump
- 34A to 34F: Holding member
- 35: Cylindrical part
- 36: Inward flange
- 37: Outward flange
- 38: Stepped portion
- 39: Annular space
- 40A to 40F: Pressing member
- 41: Holding ring
- 42: Slide member
- 43: Piston ring groove
- 44: Piston ring
- 45: Gap
- 48: Clearance
- 51: Return line
- 52: Low pressure relief valve
- 53: Oil tank
- 55: Replenishing line
- 56: Boost pump
- 57: Oil filter
- 58: Bypass line
- 59: Oil line cooler
- 61: Bearing
- 62: Supply line
- 63: Cam chamber
- 64: Drain line

## Claims

1. A fluid working machine comprising:
a rotation shaft (9);
at least one cylinder (19A);
at least one piston (18A) which reciprocates along an axial direction of the cylinder (19A) and forms a working chamber (22A) with the cylinder (19A) and a piston ring (44) provided on an outer circumference of the piston (18A);
at least one cam (17) which rotates with the rotation shaft (9);
at least one cam chamber (63) which houses the cam (17) and which is sealed from an external atmosphere;
**characterized in that** it comprises at least one drive rod (20A) whose one end is engaged with the piston (18A) such that an angle of the drive rod (20A) with respect to the axial direction of the cylinder (19A) is changeable and whose other end contacts the cam (17); and
**in that** a working fluid pressure in the working chamber (22A) is constantly set higher than a working fluid pressure in the cam chamber (63) so that the working fluid is supplied from the working chamber (22A) to the cam chamber (63) via a gap (45) formed between the cylinder (19A) and the piston (18A).

2. The fluid working machine according to claim 1, comprising:
a high pressure line (13) and a low pressure line (14) which are in communication with the working chamber (22A) and
a tank (53) which is open to atmosphere and in communication with the low pressure line (14) so as to generate a prescribed pressure difference between the tank (53) and the low pressure line (14);
a supply line (62) comprising a replenishing pump which pumps the working fluid stored in the tank (53) to the low pressure line (14) so as to generate the prescribed pressure difference between the tank (53) and the low pressure line (14); and
a drain line (64) which is connected to the tank (53) so that a pressure difference between the cam chamber (63) and the tank (53) is smaller than the prescribed pressure difference.

3. The fluid working machine according to claim 2,
wherein the supply line (62) diverges from the low pressure line (14), the supply line (62) cooling the working fluid introduced from the low pressure line (14) and then supplying the working fluid to the cam chamber (63) and a bearing (61) for supporting the rotation shaft.

4. The fluid working machine according to any one of claims 1 to 3,
wherein at least one of a surface of the piston (18A) or a surface of the cylinder (19A) facing the piston is hardened.

5. The fluid working machine according to any one of claims 1 to 4,
wherein at least one of a surface of the piston (18A) or an engagement surface of the drive rod (20A) engaging with the piston (18A) is hardened.

6. The fluid working machine according to any one of claims 1 to 5,
wherein a piston ring groove (43) is formed on a side surface of the piston (18A) along a circumferential direction and a piston ring (44) is fitted in the piston groove (43), and
wherein the side surface of the piston (18A) is crowned from the piston groove (43) or a position between a top surface of the piston (18A) and the piston ring groove (43) to the top surface so that the piston (18A) decreases in diameter with distance from the position toward the top surface.

7. The fluid working machine according to claim 6,
wherein in such a case that the piston (18A) inclines with respect to the cylinder (19A) in an area of the gap (45) in accordance with change of an angle of the drive rod (20A) with respect to the cylinder axis, the working fluid leaks to the cam chamber (63) via a piston top side of the gap (45) so as to form a fluid film in the gap (45) for preventing the piston (18A) from directly contacting the cylinder (19A).

8. The fluid working machine according to any one of claims 1 to 7,
wherein the gap (45) is set at 0.05% to 0.15% of a diameter of the piston (18A).

9. The fluid working machine according to any one of claims 1 to 8,
wherein the piston (18A) and the drive rod (20A) comprises an inner passage (28A,28B) which supplies the working fluid from the working chamber (22A) to a contact surface between the drive rod (20A) and the cam (17).

10. The fluid working machine according to claim 9, further comprising:
a flow-restricting member for adjusting an amount of the working fluid to be introduced through the inner passage (28A,28B).

11. The fluid working machine according to claim 9,
wherein the inner passage comprises:
a first inner passage (28A) which is formed in the piston (18A) and supplies the working fluid from the working chamber (22A) to an engagement surface between the piston (18A) and the drive rod (20A); and
a second inner passage (28B) which is formed in the drive rod (20A) and supplies the working fluid from the engagement surface to the contact surface, and
wherein the first inner passage (28A) has a greater cross-sectional area than the second inner passage (28B).

12. The fluid working machine according to any one of claims 1 to 11,
wherein a plurality of the cylinders (19A-19F), the pistons (18A-18F) and the drive rods (20A-20F) are radially arranged along a radial direction of the cam (17).

13. A wind turbine generator comprising:
a hub (6) on which the blade (7) is mounted;
a main shaft (9) which is connected to the hub (6);
a hydraulic pump (11) which is attached to the main shaft (9);
at least one hydraulic motor (12) which is driven by pressurized oil supplied from the hydraulic pump (11); and
at least one generator (16) which is coupled to the hydraulic motor (12),
wherein at least one of the hydraulic pump (11) or the hydraulic motor (12) is a fluid working machine according to any one of claims 1 to 12.

## Patentansprüche

1. Fluidarbeitsmaschine, umfassend:
eine Drehwelle (9),
mindestens einen Zylinder (19A),
mindestens einen Kolben (18A), der sich entlang einer axialen Richtung des Zylinders (19A) hin und her bewegt und mit dem Zylinder (19A) und einem Kolbenring (44), der an einem äußeren Umfang des Kolbens (18A) vorgesehen ist, eine Arbeitskammer (22A) bildet,
mindestens einen Nocken (17), der sich mit der Drehwelle (9) dreht,
mindestens eine Nockenkammer (63), die den Nocken (17) aufnimmt und die von einer Außenatmosphäre abgeschlossen ist,
**dadurch gekennzeichnet, dass** sie mindestens eine Antriebsstange (20A), deren eines Ende mit dem Kolben (18A) so in Eingriff steht, dass ein Winkel der Antriebsstange (20A) in Bezug auf die axiale Richtung des Zylinders (19A) veränderbar ist, und deren anderes Ende den Nocken (17) berührt, umfasst und
dadurch, dass ein Arbeitsfluiddruck in der Arbeitskammer (22A) ständig höher als ein Arbeitsfluiddruck in der Nockenkammer (63) eingestellt ist, so dass das Arbeitsfluid von der Arbeitskammer (22A) über einen Zwischenraum (45), der zwischen dem Zylinder (19A) und dem Kolben (18A) gebildet ist, der Nockenkammer (63) zugeführt wird.

2. Fluidarbeitsmaschine nach Anspruch 1, die umfasst:
eine Hochdruckleitung (13) und eine Niederdruckleitung (14), die mit der Arbeitskammer (22A) in Kommunikation stehen und
einen Tank (53), welcher gegen Atmosphäre offen ist und mit der Niederdruckleitung (14) in Kommunikation steht, um eine vorgegebene Druckdifferenz zwischen dem Tank (53) und der Niederdruckleitung (14) zu erzeugen,
eine Zufuhrleitung (62), die eine Füllpumpe umfasst, welche das Arbeitsfluid, das in dem Tank (53) gespeichert ist, zu der Niederdruckleitung (14) pumpt, um die vorgegebene Druckdifferenz zwischen dem Tank (53) und der Niederdruckleitung (14) zu erzeugen und
eine Abführleitung (64), die mit dem Tank (53) verbunden ist, derart, dass eine Druckdifferenz zwischen der Nockenkammer (63) und dem Tank (53) kleiner als die vorgegebene Druckdifferenz ist.

3. Fluidarbeitsmaschine nach Anspruch 2,
wobei die Zufuhrleitung (62) von der Niederdruckleitung (14) abzweigt, wobei die Zufuhrleitung (62) das Arbeitsfluid kühlt, welches von der Niederdruckleitung (14) eingeleitet wird, und dann das Arbeitsfluid der Nockenkammer (63) und einem Lager (61) zum Lagern der Drehwelle zuführt.

4. Fluidarbeitsmaschine nach einem beliebigen der Ansprüche 1 bis 3,
wobei mindestens eine aus der Gruppe umfassend eine Oberfläche des Kolbens (18A) und eine dem Kolben zugewandte Oberfläche des Zylinders (19A) gehärtet ist.

5. Fluidarbeitsmaschine nach einem beliebigen der Ansprüche 1 bis 4,
wobei mindestens eine aus der Gruppe umfassend eine Oberfläche des Kolbens (18A) und eine Eingriffsoberfläche der Antriebsstange (20A), die mit dem Kolben (18A) in Eingriff steht, gehärtet ist.

6. Fluidarbeitsmaschine nach einem beliebigen der Ansprüche 1 bis 5,
wobei eine Kolbenringnut (43) an einer Seitenoberfläche des Kolbens (18A) entlang einer Umfangsrichtung ausgebildet ist und ein Kolbenring (44) in der Kolbennut (43) angebracht ist und
wobei die Seitenoberfläche des Kolbens (18A) von der Kolbennut (43) oder einer Position zwischen einer oberen Oberfläche des Kolbens (18A) und der Kolbenringnut (43) zu der oberen Oberfläche gewölbt ist, so dass der Durchmesser des Kolbens (18A) mit zunehmender Entfernung von der Position in Richtung der oberen Oberfläche kleiner wird.

7. Fluidarbeitsmaschine nach Anspruch 6,
wobei in einem derartigen Fall, dass der Kolben (18A) in Bezug auf den Zylinder (19A) in einem Bereich des Zwischenraums (45) entsprechend der Änderung eines Winkels der Antriebsstange (20A) in Bezug auf die Zylinderachse geneigt ist, das Arbeitsfluid über eine Kolbenoberseite des Zwischenraums (45) zu der Nockenkammer (63) austritt, um in dem Zwischenraum (45) einen Fluidfilm zum Verhindern, dass der Kolben (18A) direkt mit dem Zylinder (19A) in Berührung kommt, zu bilden.

8. Fluidarbeitsmaschine nach einem beliebigen der Ansprüche 1 bis 7,
wobei der Zwischenraum (45) auf 0,05% bis 0,15% eines Durchmessers des Kolbens (18A) eingestellt ist.

9. Fluidarbeitsmaschine nach einem beliebigen der Ansprüche 1 bis 8,
wobei der Kolben (18A) und die Antriebsstange (20A) einen inneren Durchgang (28A, 28B) umfassen, der das Arbeitsfluid von der Arbeitskammer (22A) zu einer Kontaktoberfläche zwischen der Antriebsstange (20A) und dem Nocken (17) zuführt.

10. Fluidarbeitsmaschine nach Anspruch 9, die ferner umfasst:
ein durchflussbegrenzendes Glied zum Einstellen einer durch den inneren Durchgang (28A, 28B) einzuleitenden Menge des Arbeitsfluids.

11. Fluidarbeitsmaschine nach Anspruch 9,
wobei der innere Durchgang umfasst:
einen ersten inneren Durchgang (28A), der in dem Kolben (18A) ausgebildet ist und das Arbeitsfluid von der Arbeitskammer (22A) zu einer Eingriffsoberfläche zwischen dem Kolben (18A) und der Antriebsstange (20A) zuführt und
einen zweiten inneren Durchgang (28B), der in der Antriebsstange (20A) ausgebildet ist und das Arbeitsfluid von der Eingriffsoberfläche zu der Kontaktoberfläche zuführt und
wobei der erste innere Durchgang (28A) eine größere Querschnittsfläche als der zweite innere Durchgang (28B) aufweist.

12. Fluidarbeitsmaschine nach einem beliebigen der Ansprüche 1 bis 11,
wobei mehrere Zylinder (19A-19F), Kolben (18A-18F) und Antriebsstangen (20A-20F) entlang einer radialen Richtung des Nockens (17) radial angeordnet sind.

13. Windenergieanlage, umfassend:
eine Nabe (6), an der das Rotorblatt (7) angebracht ist,
eine Hauptwelle (9), die mit der Nabe (6) verbunden ist,
eine Hydraulikpumpe (11), die an der Hauptwelle (9) befestigt ist,
mindestens einen Hydraulikmotor (12), der mittels Drucköl angetrieben wird, welches von der Hydraulikpumpe (11) zugeführt wird und
mindestens einen Generator (16), der mit dem Hydraulikmotor (12) gekoppelt ist,
wobei mindestens eine aus der Gruppe umfassend die Hydraulikpumpe (11) und den Hydraulikmotor (12) eine Fluidarbeitsmaschine nach einem beliebigen der Ansprüche 1 bis 12 ist.

## Revendications

1. Machine de travail à fluide comportant :
un arbre de rotation (9) ;
au moins un cylindre (19A) ;
au moins un piston (18A) qui se déplace en va-et-vient le long d'une direction axiale du cylindre (19A) et forme une chambre de travail (22A) avec le cylindre (19A) et un segment de piston (44) prévu sur une circonférence extérieure du piston (18A) ;
au moins une came (17) qui tourne avec l'arbre de rotation (9) ;
au moins une chambre de came (63) qui renferme la came (17) et qui est scellée par rapport à une atmosphère externe ;
**caractérisée en ce qu'**elle comprend au moins une bielle (20A) dont une extrémité est engagée avec le piston (18A) de telle sorte qu'un angle de la bielle (20A) par rapport à la direction axiale du cylindre (19A) est variable et dont l'autre extrémité est en contact avec la came (17) ; et
**en ce qu'**une pression de fluide de travail dans la chambre de travail (22A) est prévue constamment plus élevée qu'une pression du fluide de travail dans la chambre de came (63) de telle sorte que le fluide de travail est délivré depuis la chambre de travail (22A) jusqu'à la chambre de came (63) par l'intermédiaire d'un interstice (45) formé entre le cylindre (19A) et le piston (18A).

2. Machine de travail à fluide selon la revendication 1, comportant :
une conduite à haute pression (13) et une conduite à basse pression (14) qui sont en communication avec la chambre de travail (22A) et
un réservoir (53) qui est ouvert sur l'atmosphère et en communication avec la conduite à basse pression (14) de façon à générer une différence de pression prescrite entre le réservoir (53) et la conduite à basse pression (14) ;
une conduite d'alimentation (62) comportant une pompe de réapprovisionnement qui pompe le fluide de travail stocké dans le réservoir (53) vers la conduite à basse pression (14) de façon à générer la différence de pression prescrite entre le réservoir (53) et la conduite à basse pression (14) ; et
une conduite de vidange (64) qui est reliée au réservoir (53) de telle sorte qu'une différence de pression entre la chambre de came (63) et le réservoir (53) est plus petit que la différence de pression prescrite.

3. Machine de travail à fluide selon la revendication 2,
dans laquelle la conduite d'alimentation (62) diverge de la conduite à basse pression (14), la conduite d'alimentation (62) refroidissant le fluide de travail introduit depuis la conduite à basse pression (14) et délivrant alors le fluide de travail à la chambre de came (63) et à un palier (61) prévu pour supporter l'arbre de rotation.

4. Machine de travail à fluide selon l'une quelconque des revendications 1 à 3,
dans laquelle au moins une d'une surface du piston (18A) ou d'une surface du cylindre (19A) faisant face au piston est durcie.

5. Machine de travail à fluide selon l'une quelconque des revendications 1 à 4,
dans laquelle au moins une d'une surface du piston (18A) ou d'une surface d'engagement de la bielle (20A) engageant le piston (18A) est durcie.

6. Machine de travail à fluide selon l'une quelconque des revendications 1 à 5,
dans laquelle une gorge de segment de piston (43) est formée sur une surface latérale du piston (18A) le long d'une direction circonférentielle et un segment de piston (44) est monté dans la gorge de piston (43), et
dans laquelle la surface latérale du piston (18A) est bombée depuis la gorge de piston (43) ou une position entre une surface supérieure du piston (18A) et la gorge de segment de piston (43) jusqu'à la surface supérieure de telle sorte que le piston (18A) diminue de diamètre avec la distance depuis la position vers la surface supérieure.

7. Machine de travail à fluide selon la revendication 6,
dans laquelle, dans un cas où le piston (18A) est incliné par rapport au cylindre (19A) dans une zone de l'interstice (45) en fonction d'un changement d'un angle de la bielle (20A) par rapport à l'axe de cylindre, le fluide de travail fuit vers la chambre de came (63) par l'intermédiaire d'un côté supérieur de piston de l'interstice (45) de façon à former un film de fluide dans l'interstice (45) afin d'empêcher le piston (18A) d'entrer directement en contact avec le cylindre (19A).

8. Machine de travail à fluide selon l'une quelconque des revendications 1 à 7,
dans lequel l'interstice (45) est établi à 0,05% à 0,15% d'un diamètre du piston (18A).

9. Machine de travail à fluide selon l'une quelconque des revendications 1 à 8,
das laquelle le piston (18A) et la bielle (20A) comportent un passage intérieur (28A, 28B) qui délivre le fluide de travail depuis la chambre de travail (22A) jusqu'à une surface de contact entre la bielle (20A) et la came (17).

10. Machine de travail à fluide selon la revendication 9, comportant en outre :
un élément de limitation d'écoulement destiné à ajuster une quantité du fluide de travail devant être introduite à travers le passage intérieur (28A, 28B).

11. Machine de travail à fluide selon la revendication 9,
dans laquelle le passage intérieur comporte :
un premier passage intérieur (28A) qui est formé dans le piston (18A) et délivre le fluide de travail depuis la chambre de travail (22A) jusqu'à une surface d'engagement entre le piston (18A) et la bielle (20A) ; et
un deuxième passage intérieur (28B) qui est formé dans la bielle (20A) et délivre le fluide de travail depuis la surface d'engagement jusqu'à la surface de contact, et
dans laquelle le premier passage intérieur (28A) a une section transversale plus grande que le deuxième passage intérieur (28B).

12. Machine de travail à fluide selon l'une quelconque des revendications 1 à 11,
dans laquelle une pluralité de cylindres (19A à 19F), de pistons (18A à 18F) et de bielles (20A à 20F) est disposée radialement le long d'une direction radiale de la came (17).

13. Eolienne comportant :
un moyeu (6) sur lequel la pale (7) est montée ;
un arbre principal (9) qui est relié au moyeu (6) ;
une pompe hydraulique (11) qui est fixée sur l'arbre principal (9) ;
au moins un moteur hydraulique (12) qui est entraîné par de l'huile sous pression délivrée à partir de la pompe hydraulique (11) ; et
au moins une génératrice (16) qui est reliée au moteur hydraulique (12),
dans laquelle au moins un de la pompe hydraulique (11) ou du moteur hydraulique (12) est une machine de travail à fluide selon l'une quelconque des revendications 1 à 12.
